# EUROPEAN PATENT SPECIFICATION

(11) **EP 1 673 974 B1**
(45) Date of publication and mention of the grant of the patent: **26.11.2008**
(21) Application number: 05077983.4
(22) Date of filing: 22.12.2005
(51) Int. Cl.: A01N 59/00

(54) **Agricultural disinfectant composition comprising hypochlorous acid and spreading agents**
Landwirtschaftliche desinfizierende Zusammensetzung enthaltend Hypochlorsäure und Streumittel
Composition desinfectante pour l'agriculture comprenant de l'acide hypochloreux et des agents d'epandage

(30) Priority: 24.12.2004 JP 2004374010
(43) Date of publication of application: 28.06.2006
(73) Proprietor: Shin-Etsu Chemical Company, Ltd., Tokyo 100-0004 (JP)
(72) Inventor: Nakanishi, Tetsuo, Gunma 379-0224 (JP); Yamamoto, Akira, Gunma 379-0224 (JP)
(74) Representative: Winckels, Johannes Hubertus F.

(56) References cited:
- EP-A- 0 355 650
- EP-A- 1 053 678
- EP-A- 1 236 399
- EP-A- 1 588 617
- WO-A-99/38943
- "Manufacture of electrolyzed water for agriculture, involves electrolyzing an aqueous solution of a metal chloride containing hypochlorous acid, alkali metal and alkaline earth metal using non-diaphragm electrolytic cell" DERWENT, 2002, XP002340023

## Description

### Technical Field

The present invention relates to an agricultural disinfectant composition, specifically to a slightly acidic agricultural disinfectant composition comprising hypochlorous acid, a polyether-modified silicone and an ethylene oxide and/or propylene oxide adduct of acetylene glycol as spreading agents.

It is known that electrolyzed water containing hypochlorous acid as an active ingredient, which is prepared by electrolyzing an aqueous solution of an alkali metal chloride such as sodium chloride and potassium chloride, is used as an agricultural disinfectant as described in Japanese Patent Laid-Open No. 01-180293. The acidic electrolyzed water has disinfecting efficacy on various kinds of bacteria such as Escherichia *coli* and *Staphylococcus aureus*, and is environmentally clean. For this reason, it has attracted much interest and many studies on application thereof are under way in the pharmaceutical industry and the food industry, as described in Japanese Patent Laid-Open Nos. 07-118158, 08-252310, and 2000-233161.

There are two kinds of acidic electrolyzed water used in the food industry, i.e., strongly acidic electrolyzed water and slightly acidic electrolyzed water. The strongly acidic electrolyzed water is prepared by electrolyzing an aqueous solution of sodium chloride at a concentration of 0.2% or lower in an electrolytic cell provided with a diaphragm between a cathodic side and an anodic side. The strongly acidic electrolyzed water is found in the anodic side. This has a pH of 2.7 or lower, an available chlorine content of from 20 to 60mg/kg, and an oxidation-reduction potential of 1000 mV or higher. It is known that this contains much free hypochlorous acid responsible for disinfection and shows a disinfecting efficacy in a short period of time for the relatively low available chlorine content.

Meanwhile the slightly acidic electrolyzed water is prepared by electrolyzing an aqueous solution of hydrochloric acid at a concentration of a 2 to 6 % in an electrolytic cell without a diaphragm. The slightly acidic electrolyzed water has a pH of from 4.0 to 6.8 and an available chlorine content of from 10 to 60 mg/kg. It is known that this contains much active ingredient, i.e., free hypochlorous acid, to show an excellent disinfecting efficacy. Further, this is more stable with time and, because it does not contain chloride ion, environmentally cleaner and safer compared with the strongly acidic electrolyzed water.

Applications of these electrolyzed water have been studied for sterilizing agricultural plants. For example, Japanese Patent Application Laid-Open No.07-187931 describes that powdery mildew and downy mildew are controlled by spraying a strongly acidic electrolyzed water having a pH of about 2.7 on plants for several times. However, such strongly acidic water may cause physiological disorder in the plants and splaying conditions such as timing and weather should be carefully chosen. Another drawback of the strongly acidic electrolyzed water is that its efficacy diminishes faster and varies larger than conventional disinfectants having longstanding efficacy, because the active ingredient, i.e., hypochlorous acid, is decomposed by light or air when sprayed to the atmosphere. In contrast, the slightly acidic electrolyzed water does not cause physiological disorder in the plants.

To improve wettability of the acidic electrolyzed water to plant surface by decreasing a surface tension thereof, a conventional surfactant such as polyoxyethylene alkylphenyl ether was added, but the disinfecting efficacy was hardly improved. This is probably because the acidic electrolyzed water has so high a dynamic surface tension that it cannot reach target bacteria evenly and surely, or fast enough for hypochlorous acid to remain undecomposed.

Meanwhile, polyether-modified silicones having trisiloxane main chain are in practical use which silicones decrease surface tension of an aqueous solution of agricultural chemicals larger than conventional polyoxyethylene alkylphenyl, whereby improve spreadability of the solution, as described in Japanese Patent Application Laid-Open Nos. 02-73002, 2000-327787, and U.S. Patent No. 5,104,647 specification. From G.A.Policello et al., Brighton Crop Protection Conference, 1993, 1325-1330, it is known that synergistic effect is attained by mixing a polyether-modified silicone having trisiloxane backbone with a nonionic surfactant.

However, these spreading agents are used mostly at a neutral pH. The polyether-modified silicone described in Japanese Patent Application Laid-Open No. 2000-327787 is mentioned to be stable at pH 4. However, the present inventors have found that the silicone tends to damage agricultural plants.

### Summary of the Invention

A purpose of the present invention is to provide an agricultural disinfectant composition comprising spreading agents which are stable even in an acidic disinfectant water, effectively lower surface tension without damaging agricultural plants.

As a result of extensive studies to attain the aforesaid purpose, the present inventors have made the following invention: A disinfectant composition comprising slightly acidic electrolyzed water, characterized in that the composition comprises a mixture of the following components (A) and (B) in such an amount that the composition has a surface tension of 30 mN/m or lower at 25 °C, said mixture containing the components (A) and (B) in a weight ratio of (A)/(B) of from 1/99 to 50/50, wherein
(A) is at least one selected from the group consisting of a polyether-modified silicone represented by the following formula (1) and a polyether-modified silicone represented by the following formula (2) 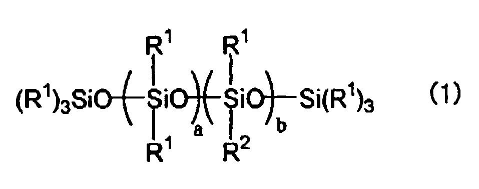 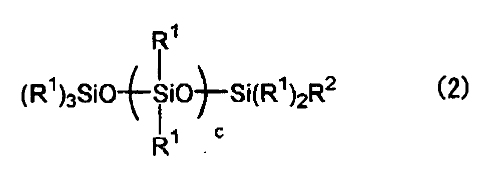 wherein R¹, which may be the same with or different from each other, is selected from the group consisting of alkyl groups, aryl groups, aralkyl groups and fluorinated alkyl groups, each having 1 to 30 carbon atoms,
   R² is a polyoxyalkylene group represented by the following formula (3) :

   -C_{d}H_{2d}-O-(C₂H₄O)ₚ(C₃H₆O)_{q}-R³ (3)

   wherein R³ is a hydrogen atom, a hydrocarbon group having 1 to 30 carbon atoms or an organic group represented by the formula, R⁴-(CO)-, wherein R⁴ is a hydrocarbon group having 1 to 10 carbon atoms,
   a is an integer of from 0 to 3, b is an integer of 1 or 2,
   c is an integer of from 0 to 6, d is an integer of from 2 to 5,
   p is an integer of from 5 to 15, and q is an integer of from 0 to 10, and
(B) is at least one selected from the group consisting of ethylene oxide adduct, propylene oxide adduct or ethylene oxide and propylene oxide mixed-adduct of acetylene glycol, represented by the following formula (4) and hydrogenated products thereof 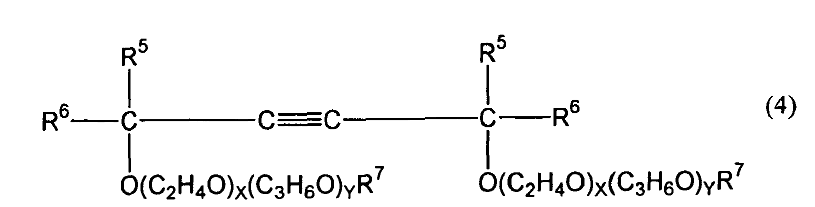
wherein each of R⁵ and R⁶, which may be the same with or different from each other, is an alkyl group having 1 to 5 carbon atoms, R⁷ is a hydrogen atom or an alkyl group having 1 to 5 carbon atoms, each of X and Y is an integer of from 0 to 25 and a sum of X and Y ranges from 0.5 to 50 on average.

Another aspect of the present invention is a method of disinfecting agricultural plants comprising the steps of
preparing slightly acidic electrolyzed water with a surface tension of 30 mN/m or lower by adding a mixture comprising aforesaid components (A) and (B) in a weight ratio of (A)/(B) in a weight ratio of (A)/(B) of from 1/99 to 50/50, and
spraying the slightly acidic electrolyzed water.

The aforesaid present disinfectant composition wets plant surface very well. It is absorbed through stomas, too, and consequently attains high disinfection efficacy. The active ingredient, i.e., hypochlorous acid, decomposes slowly. The composition has good storage stability and no harmful effects on environment and plants.

European Patent Application No.05075955.4 describes a disinfectant composition comprising slightly acidic electrolyzed water and the component (A). The composition does not comprise the compound represented by the above formula (4).

### Preferred Embodiments of the Invention

The aqueous solution of hypochlorous acid used in the present invention has a pH of from 4.0 to 6.8 at 25 °C. The aqueous solution may be acidic electrolyzed water authorized as a food additive. The electrolyzed water can be prepared by electrolyzing an aqueous dilute solution of hydrochloric acid at a concentration of from 2 to 6% in an electrolysis cell without a diaphragm. Alternatively, it can be prepared by preparing strongly acidic electrolyzed water and strongly alkaline electrolyzed water each from a sodium chloride solution and then mixing them with a ratio of the former to the latter of from 6 : 4 to 5.5 : 4.5. It may also be prepared by electrolyzing a dilute hydrochloric acid solution in an instrument used for preparing hypochlorous acid-containing electrolyzed water sold under the trade name, B. Coron, ex Miura Denshi Co., Ltd. The slightly acidic electrolyzed water has a pH ranging from 4. 0 to 6.8, preferably from 5.0 to 6.5. In the pH range, an available chlorine content ranges from 10 to 60 mg/kg and high disinfecting efficacy can be obtained. In addition, it has a longer shelf life in contrast to the strongly acidic electrolyzed water which decomposes readily to loose the activity. At a pH lower than the aforesaid lower limit, the polyether-modified silicone used in the present invention may decompose. On the other hand, at a pH higher than the aforesaid upper limit, an available chlorine content may be lower than 10 mg/kg, resulting in lower disinfecting efficacy.

The polyether-modified silicone used in the present invention is at least one selected from the group consisting of polyether-modified silicones represented by the following formula (1) and (2). 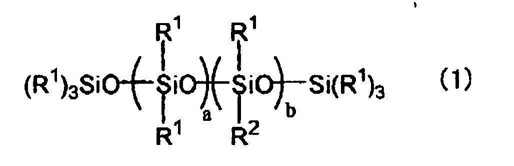 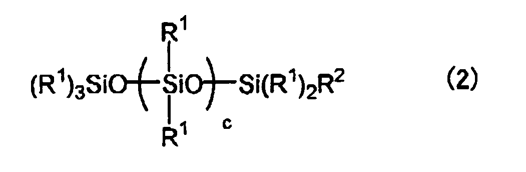 wherein R¹, which may be the same with or different from each other, is selected from the group consisting of alkyl, aryl, aralkyl and fluorinated alkyl groups, each having 1 to 30 carbon atoms. Examples of R¹ include alkyl groups such as methyl, ethyl, propyl, butyl, pentyl, hexyl, heptyl, octyl, nonyl, and decyl groups; alicyclic groups such as cyclopentyl and cyclohexyl groups; aryl groups such as phenyl and tolyl groups; aralkyl groups such as benzyl and phenethyl groups; and fluorinated alkyl groups such as trifluoropropyl and heptadecafluorodecyl groups. Preferably, R¹ is a group having 1 to 6 carbon atoms such as methyl, ethyl, propyl, butyl, or phenyl group. More preferably, 80 % or more of R¹ is a methyl group.

R² is a polyoxyalkylene group represented by the following formula (3):,

-C_{d}H_{2d}-O-(C₂H₄O)ₚ(C₃H₆O)_{q}-R³ (3)

wherein R³ is a hydrogen atom, a hydrocarbon group having 1 to 30 carbon atoms or an organic group represented by the formula, R⁴-(CO)-, wherein R⁴ is a hydrocarbon group having 1 to 10 carbon atoms. R³ may be a hydrogen atom, methyl, ethyl, propyl, butyl, or acetyl group. Preferably, R³ is a hydrogen atom or a methyl group and R⁴ is a methyl group. In the formula (3), d is an integer of from 2 to 5, preferably 3; p is an integer of from 5 to 15, preferably from 7 to 12. The propylene oxide residue is useful to improve a handling property of the polyether-modified silicone spreading agent at a low temperature and q is an integer of from 0 to 10, preferably from 0 to 8. When the polyalkylene moiety in the formula (3) consists of ethylene oxide residues and propylene oxide residues, these residues may be present blockwise or randomly.

In the formula (1), a is an integer of from 0 to 3, and b is 1 or 2. In the formula (2), c is an integer of from 0 to 6, preferably from 0 to 3.

Most preferably, the polyether-modified silicone represented by the following formula (5) is used. The silicone is commercially available under the trade name, KF-643, from Shin-Etsu Chemical Co. The silicone is desired because it lowers static surface tension.

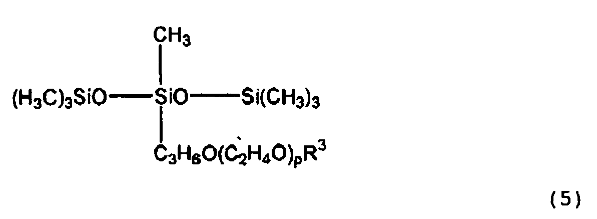

The polyether-modified silicone represented by the formulae (1) and (2) may be prepared by subjecting an orgnohydrogenpolysiloxane and a polyoxyalkylene compound having an unsaturated bond to an addition reaction.

Examples of the starting organohydrogenpolysiloxanes for the silicone (1) include M₂D^{H}, M₂DD^{H}, M₂D₂D^{H}, M₂D₃D^{H}, M₂DD^{H}₂, M₂D₂D^{H}₂ and M₂D₃D^{H}₂, which may be in an equilibrated mixture, wherein M represents (H₃C)₃SiO_{1/2} group, D represents (H₃C)₂SiO group; M^{H} and D^{H} represent M and D with one of the methyl groups being replaced with a hydrogen atom; and M^{R} and D^{R} represents those replaced with a substituent R. The aforesaid silicones maybe used alone or in an equilibriummixture. Preferred are those for q = 0 or 1 in the formula (1), i.e., M₂D^{H}, M₂DD^{H}, M₂D₂D^{H} and M₂D₃D^{H}, among which the trisiloxane, M₂D^{H}, is particularly preferred.

Examples of the starting organohydrogenpolysiloxanes for the silicone (2) include MM^{H}, MDM^{H}, MD₃M^{H}, and M^{n-Bu}D_{4.5}M^{H}. MDM^{H} may be provided in an equilibrium mixture and M^{n-Bu}D_{4.5}M^{H} may be a mixture of M^{n-Bu}D₃M^{H} and M^{n-Bu}D₆M^{H}. Preferred are MM^{H} and MD₃M^{H}, among which MD₃M^{H} is particularly preferred.

The polyoxyalkylene compound having an unsaturated bond may be represented by the following formula (6):

C_{d}H_{2d-1}-O-(C₂H₄O)ₚ(C₃H₆O)_{q}-R³ (6)

wherein d, p, q and R³ are as defied above regarding the formula (3). Most preferably, d is 3. The unsaturated bond may exist at any location, but preferably at an end of a molecule.

The polyoxyalkylene compound is reacted with the organohydrogenpolysiloxane in such an amount that a molar ratio of the terminal unsaturated group of the polyoxyalkylene to SiH group of the organohydrogenpolysiloxane, Vi/SiH, is in a range of from 0.8 to 1.5, preferably from 0.9 to 1.2.

The above addition reaction is preferably performed in the presence of a platinum catalyst or a rhodium catalyst. Preferred examples of the catalyst include chloroplatinic acid, chloroplatinic acid modified with alcohol, and a complex of chloroplatinic acid with a vinyl siloxane. A co-catalyst may be used, for example, sodium acetate and sodium citrate.

The catalyst may be used in a catalytically effective amount, but preferably in an amount of 50 ppm or less, particularly 20 ppm or less calculated as platinum or rhodium. The aforesaid addition reaction may be performed as necessary in an organic solvent. Examples of the organic solvent include aliphatic alcohols such as methanol, ethanol, 2-propanol, and butanol; aromatic hydrocarbons such as toluene and xylene; aliphatic or alicyclic hydrocarbons such as n-pentane, n-hexane, and cyclohexane; and halogenated hydrocarbons such as dichloromethane, chloroform, and carbon tetrachloride. Reaction conditions are not limited to particular ones but, preferably, performed under reflux for 1 to 10 hours.

In the present invention, (B) ethylene oxide adduct, propylene oxide adduct, or ethylene oxide and propylene oxide mixed-adduct of acetylene glycol or hydrogenated products thereof is represented by the following formula (4): 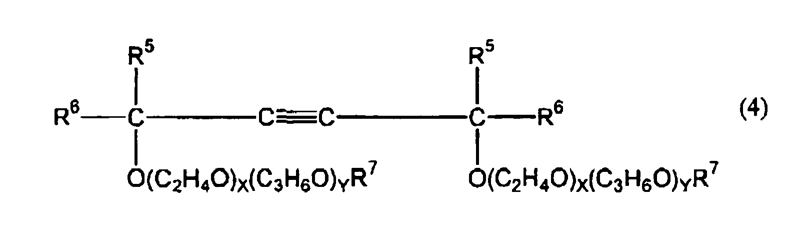 wherein each of R⁵ and R⁶ , which may be the same with or different from each other, is an alkyl group having 1 to 5 carbon atoms. That is, each of R⁵ and R⁶ is selected independently from a methyl, ethyl, propyl, butyl, and pentyl groups. R⁷ is a hydrogen atom or an alkyl group having 1 to 5 carbon atoms, preferably a hydrogen atom.

In the formula (4), each of X and Y is an integer of from 0 to 25 and a sum of X and Y ranges from 0.5 to 50 on average. A weight ratio of the polyethylene oxide chain to a number average molecular weight ranges from 10 to 80 wt%, preferably from 20 to 70 wt%. Such an adduct is sold from Nissin Chemical Industry Co., Ltd. under the trade names of Surfynol 420, 440, 465, and 485. Preferred are Surfynol 420 and 440 having a weight ratio of added ethylene oxide of from 20 to 40%. The adduct having 20 to 40% of added ethylene oxide in combination with polyether-modified silicone (A) gives appropriate foaming property, so that a disinfectant composition having improved handling property can be obtained.

It should be noted that a compound obtained by partly or fully hydrogenating an acetylene group by a known method to an ethenylene or ethylene group has solubility in water and surface activity similar to the aforesaid adduct of acetylene glycol. Moreover, shelf life and ecological safety are improved by reduction of the triple bond.

Polyether-modified silicone (A) is mixed with ethylene oxide and/or propylene oxide adduct or hydrogenated product thereof (B) in a weight ratio of (A) to (B), i.e., (A)/(B), of preferably from 1/99 to 50/50, more preferably from 10/90 to 50/50. If the ratio, (A) /(B), is below the aforesaid lower limit, a static surface tension may be too high to improve spreadability of slightly acidic electrolyzed water sprayed on a leaf surface. If the ratio, (A) /(B), is above the aforesaid higher limit, a dynamic surface tension may be too high.

The aforesaid mixture of the surfactants (A) and (B) is added to a slightly acidic electrolyzed water in such an amount that a surface tension of the electrolyzed water is 30 mN/m or lower, preferably 25mN/m or lower.

The aforesaid mixture of (A) and (B) may be added to slightly acidic electrolyzed water in advance or immediately before spraying on the site. For on site addition, an amount of the mixture corresponding to the aforesaid amount is weighed in the electrolyzed water, which typically rages from 0.01 to 1 wt%, more typically from 0.02 to 0.2 wt%, most typically from 0.05 to 0.1 wt% based on a total weight of a disinfectant composition.

The surfactant mixture largely decrease dynamic surface tension of a slightly acidic electrolyzed water, so that the electrolyzed water wets plants and rapidly spreads on surface of leaves as soon as it is sprayed on the plants. It also decreases static surface tension of the slightly acidic electrolyzed water, so that absorption of the electrolyzed water through stomas is increased, whereby disinfecting efficacy is increased. Further, harmful effect on plants caused by the use of the polyether-modified silicone alone is suppressed. A method of measuring surface tension will be explained later.

The present composition may comprise other components in such an amount that not to adversely affect the composition. Examples of the components include agricultural chemicals other than disinfectant and a defoaming agent such as a silicone defoaming agent comprising a silicone oil and silica.

### Examples

The present invention will be explained in detail below with reference to the Examples, but not limited thereto. In the Examples, surface tension, oxidation-reduction potential, and pH were measured at 25 °C.

### Examples 1-3 and Referential Examples 1 & 2

slightly acidic electrolyzed water having a pH of 6 prepared by electrolysis in an electrolytic cell without a diaphragm was used. Strongly acidic electrolyzed water having a pH of 2.7 prepared by electrolyzing a sodium chloride solution in an electrolytic cell with a diaphragm was used.
The polyether-modified silicones represented by the following formulae were used.

### Polyether-modified silicone, hereinafter referred to as Psi1:

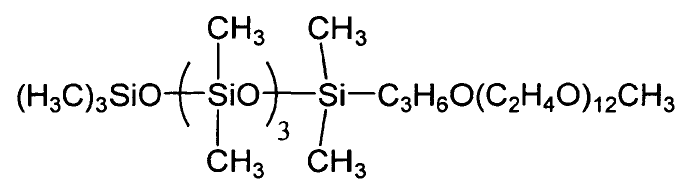

### Polyether-modified silicone, hereinafter referred to as Psi2:

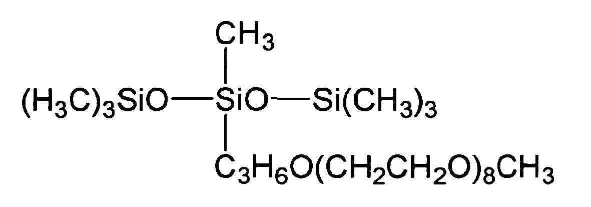

An ethylene oxide adduct of acetylene glycol represented by the following formula was used.

Ethylene oxide adduct of acetylene glycol, hereinafter referred to as Ag adduct 1: 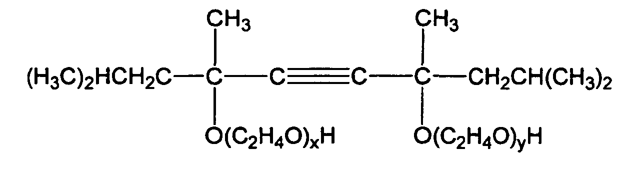 wherein a total of x and y is 3.5 on average.

Hydrogenated ethylene oxide adduct of acetylene glycol, hereinafter referred to as Ag adduct 1H: 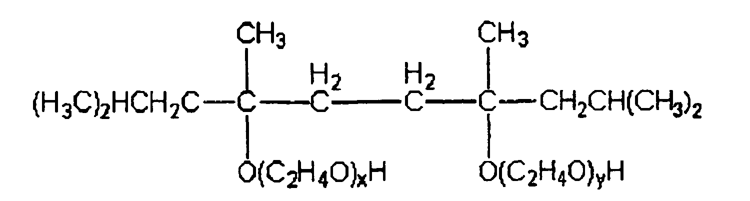 wherein a total of x and y is 3.5 on average.

The polyether-modified silicone 1 or 2, and the ethylene oxide adduct of acetylene glycol Ag adduct 1 or Ag adduct 1H were mixed in weight ratios shown the following table. Each mixture obtained was added to the slightly acidic electrolyzed water (Examples 1-3) or the strongly acidic electrolyzed water (Referential Examples 1 and 2) in an amount of 0.1 wt% and shaken. Compositions obtained were subjected to measurements of pH, oxidation-reduction potential, and surface tension. Oxidation-reduction potential and pH were measured with a pH/ion meter, F-23, ex Horiba Ltd., using electrodes, #6377-10D and #6377-10D. Surface tension was measured by Wilhelmy method using platinum plate at 25 °C with an automatic surface tensiometer, CVBP-Z, ex Kyowa Interface Science Co., Ltd.

| | Composition |
|---|---|
| Example 1 | Slightly acidic electrolyzed water:(PSi1/AG adduct 1 =25/75) = 100:0.1 |
| Example 2 | Slightly acidic electrolyzed water:(PSi2/AG adduct 1 =25/75) = 100:0.1 |
| Example 3 | Slightly acidic electrolyzed water:(PSi2/AG adduct 1H =25/75) = 100:0.1 |
| Referential Example 1 | Acidic electrolyzed water:(PSi1/AG adduct 1 =25/75) = 100:0.1 |
| Referential Example 2 | Acidic electrolyzed water:(PSi2/AG adduct 1 =25/75) = 100:0.1 |
| Comparative Example 1 | Blank slightly acidic electrolyzed water |
| Comparative Example 2 | Blank acidic electrolyzed water |
| Comparative Example 3 | Slightly acidic electrolyzed water:PSi1 = 100:0.1 |

Results are as shown in Table 1 and 2. As shown in Table 1, the disinfectant compositions containing the slightly acidic electrolyzed water having pH of 6 showed no decrease in oxidation-reduction potential and no increase in surface tension, indicating superior stability compared with those containing the acidic electrolyzed water having pH of 2.7.

Surface tension of Examples 1 and 2 are significantly lower than that of Comparative Example 1. Both polyether-modified silicone 1(Example 1) and polyether-modified silicone 2(Example 2) were excellent in attaining surface tension which was stable with time. Particularly, polyether-modified silicone 2 was excellent in lowering surface tension.

**Table 1**

| | Days elapsed | 0 | 1 | 4 | 5 | 6 | 7 |
|---|---|---|---|---|---|---|---|
| Example 1 | pH | 6.05 | 6.02 | 5.99 | 5.85 | 5.91 | 5.79 |
| | Oxidation-reduction potential, mV | 845 | 828 | 810 | 809 | 805 | 799 |
| | Surface tension, mN/m | 24.3 | 23.2 | 23.7 | 24.5 | 24.1 | 24.1 |
| Example 2 | pH | 6.22 | 6.11 | 6.05 | 6.1 | 5.97 | 6.01 |
| | Oxidation-reduction potential, mV | 838 | 832 | 828 | 792 | 783 | 822 |
| | Surface tension, mN/m | 21.1 | 20.9 | 21.1 | 21.5 | 21.9 | 21.8 |
| Comparative Example 1 blank slightly acidic electrolyzed water(pH=6) | pH | 6 | 6.18 | 6.46 | 6.3 | 6.36 | 6.28 |
| | Oxidation-reduction potential, mV | 878 | 877 | 878 | 868 | 856 | 870 |
| | Surface tension, mN/m | 58.6 | 61.2 | 65.3 | 64.3 | 71.2 | 68.3 |

**Table 2**

| | Days elapsed | 0 | 1 | 4 | 5 | 6 | 7 |
|---|---|---|---|---|---|---|---|
| Referential Example 1 | pH | 2.61 | 2.52 | 2.59 | 2.76 | 2.6 | 2.62 |
| | Oxidation-reduction potential, mV | 1100 | 1020 | 920 | 839 | 789 | 770 |
| | Surface tension, mN/m | 24 | 26.1 | 26.6 | 27.9 | 28.1 | 30.7 |
| Referential Example 2 | pH | 2.58 | 2.51 | 2.72 | 2.61 | 2.77 | 2.78 |
| | Oxidation-reduction potential, mV | 1112 | 855 | 810 | 690 | 622 | 617 |
| | Surface tension, mN/m | 21.1 | 28.5 | 29.3 | 33.2 | 33 | 32.9 |
| Comparative Example 2 blank acidic electrolyzed water(pH=2.7) | pH | 2.72 | 2.69 | 2.64 | 2.62 | 2.58 | 2.57 |
| | Oxidation-reduction potential, mV | 1129 | 1130 | 1120 | 1122 | 1125 | 1111 |
| | Surface tension, mN/m | 68.2 | 69.3 | 67 | 70 | 71.1 | 70.2 |

Efficacy of the present composition to control powdery mildew on cucumber was tested. The test was performed on cucumbers, "Sharp 301", in 7th to 8th leaf stage in September 2004 in a greenhouse. After confirming naturally occurred powdery mildew, the present composition was sprayed for 3 times every 3 days. All of the cucumber leaves were examined 10 days after the first spraying to determine incidence of the powdery mildew. The leaves were also visually observed for damage by the sprayed composition such as leaf scorch or bleaching.

**Table 3**

| | pH | Incidence of powdery mildew, % | Damages Visual observation |
|---|---|---|---|
| Example 3 | 6.0-6.4 | 15 | No |
| Comparative Example 1 | 6.0-6.4 | 41 | No |
| Refential Example 2 | 2.5-2.8 | 25 | A little |
| Uncontrolled | - | 61 | No |
| Comparative Example 3 | 6.0-6.4 | Measurement was terminated on 3rd day due to the damages were observed | Serious |

As shown in Table 3, the present composition of Example 3 had a significantly higher efficacy of controlling powdery mildew on cucumber compared with other compositions. The present composition did not foam in its preparation process and had a good handling property. Moreover, it did not have harmful effect such as the one seen in Comparative Example 3.

### Industrial Applicability

The present composition comprising slightly acidic electrolyzed water is suitable as an agricultural disinfectant having excellent disinfecting efficacy and handling property.

## Claims

1. A disinfectant composition comprising electrolyzed water which contains hypochlorous acid and has a pH of from 4.0 to 6.8 and an available chlorine content of from 10 to 60 mg/kg, **characterized in that** the composition comprises a mixture of the following components (A) and (B) in such an amount that the composition has a surface tension of 30 mN/m or lower at 25 °C, said mixture containing the components (A) and (B) in a weight ratio of (A)/(B) of from 1/99 to 50/50, wherein
(A) is at least one selected from the group consisting of a polyether-modified silicone represented by the following formula (1) and a polyether-modified silicone represented by the following formula (2) 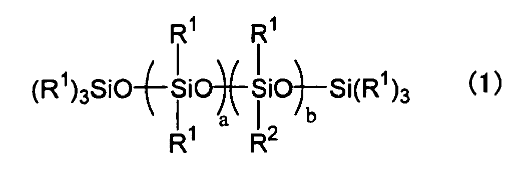 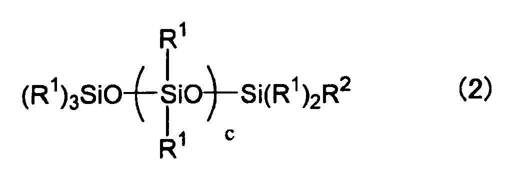 wherein R¹, which may be the same with or different from each other, is selected from the group consisting of alkyl groups, aryl groups, aralkyl groups and fluorinated alkyl groups, each having 1 to 30 carbon atoms,
R² is a polyoxyalkylene group represented by the following formula (3):
-C_{d}H_{2d}-O-(C₂H₄O)ₚ(C₃H₆O)_{q}-R³ (3)
wherein R³ is a hydrogen atom, a hydrocarbon group having 1 to 30 carbon atoms or an organic group represented by the formula, R⁴-(CO)-, wherein R⁴ is a hydrocarbon group having 1 to 10 carbon atoms,
a is an integer of from 0 to 3, b is an integer of 1 or 2,
c is an integer of from 0 to 6, d is an integer of from 2 to 5, p is an integer of from 5 to 15, and q is an integer of from 0 to 10, and
(B) is at least one selected from the group consisting of ethylene oxide adduct, propylene oxide adduct or ethylene oxide and propylene oxide mixed-adduct of acetylene glycol, represented by the following formula (4) and hydrogenated products thereof 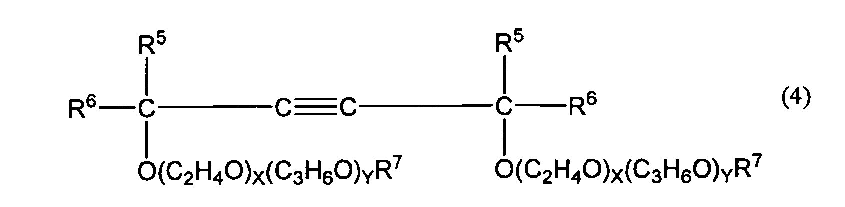
wherein each of R⁵ and R⁶ , which may be the same with or different from each other, is an alkyl group having 1 to 5 carbon atoms, R⁷ is a hydrogen atom or an alkyl group having 1 to 5 carbon atoms, each of X and Y is an integer of from 0 to 25 and a sum of X and Y ranges from 0.5 to 50 on average.

2. The disinfectant composition according to claim 1, wherein the composition has a pH of from 5.0 to 6.8 at 25 °C.

3. The disinfectant composition according to claim 1 or 2, wherein the polyether-modified silicone is represented by the following formula (5): 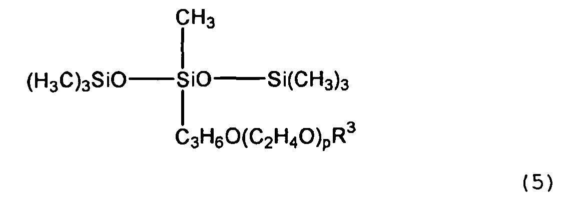 wherein R³ is a hydrogen atom, a hydrocarbon group having 1 to 30 carbon atoms or an organic group represented by the formula, R⁴-(CO) -, wherein R⁴ is a hydrocarbon group having 1 to 10 carbon atoms and p is an integer of from 5 to 15.

4. The disinfectant composition according to claim 3, wherein R³ is a hydrogen atom or a methyl group.

5. A method of disinfecting agricultural plants comprising the steps of
adding a mixture of the following components (A) and (B) in a weight ratio of (A)/(B) of from 1/99 to 50/50 to an electrolyzed water in such an amount that the electrolyzed water has a surface tension at 25 °C of 30 mN/m or lower, wherein
the electrolyzed water contains hypochlorous acid and has a pH of from 4.0 to 6.8 and an available chlorine content of from 10 to 60 mg/kg,
(A) is at least one selected from the group consisting of a polyether-modified silicone represented by the following formula (1) and a polyether-modified silicone represented by the following formula (2) 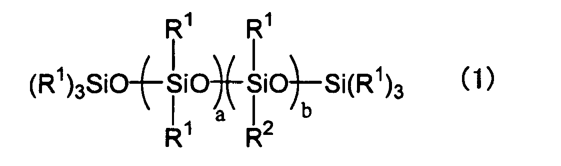 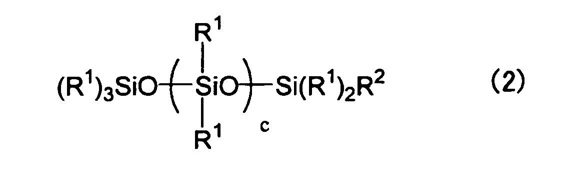 wherein R¹, which may be the same with or different from each other, is selected from the group consisting of alkyl groups, aryl groups, aralkyl groups and fluorinated alkyl groups, each having 1 to 30 carbon atoms,
R² is a polyoxyalkylene group represented by the following formula (3) :
-C_{d}H_{2d}-O-(C₂H₄O)ₚ(C₃H₆O)_{q}-R³ (3)
wherein R³ is a hydrogen atom, a hydrocarbon group having 1 to 30 carbon atoms or an organic group represented by the formula, R⁴-(CO) -, wherein R⁴ is a hydrocarbon group having 1 to 10 carbon atoms,
a is an integer of from 0 to 3, b is an integer of 1 or 2,
c is an integer of from 0 to 6, d is an integer of from 2 to 5, p is an integer of from 5 to 15, and q is an integer of from 0 to 10, and
(B) is at least one selected from the group consisting of ethylene oxide adduct, propylene oxide adduct or ethylene oxide and propylene oxide mixed-adduct of acetylene glycol, represented by the following formula (4) and hydrogenated products thereof 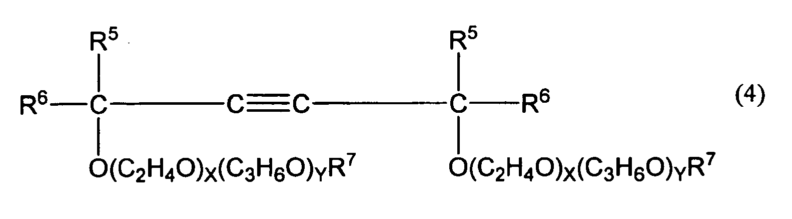
wherein each of R⁵ and R⁶ , which may be the same with or different from each other, is an alkyl group having 1 to 5 carbon atoms, R⁷ is a hydrogen atom or an alkyl group having 1 to 5 carbon atoms, each of X and Y is an integer of from 0 to 25 and a sum of X and
Y ranges from 0.5 to 50 on average, and
spraying the electrolyzed water having a surface tension at 25 °C of 30 mN/m or lower on agricultural plants.

## Patentansprüche

1. Desinfektionsmittelzusammensetzung, umfassend elektrolysiertes Wasser, welches hypochlorige Säure enthält und einen pH von 4,0 bis 6,8 besitzt, sowie einen verfügbaren Chlorgehalt von 10 bis 60 mg/kg, **dadurch gekennzeichnet, dass** die Zusammensetzung eine Mischung der folgenden Komponenten (A) und (B) in einer solchen Menge umfasst, dass die Zusammensetzung eine Oberflächenspannung von 30 mN/m oder weniger bei 25°C besitzt, wobei die Mischung die Komponenten
(A) und (B) in einem Gewichtsverhältnis von (A)/(B) von 1/99 bis 50/50 enthält, wobei
(A) mindestens eines ist, ausgewählt aus der Gruppe, bestehend aus einem Polyether-modifizierten Silikon, verkörpert durch die folgende Formel (1), und einem Polyether-modifizierten Silikon, verkörpert durch die folgende Formel (2) 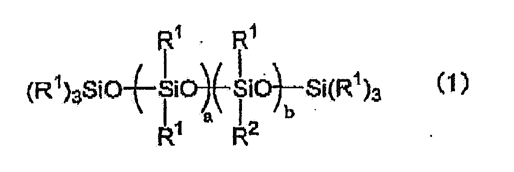 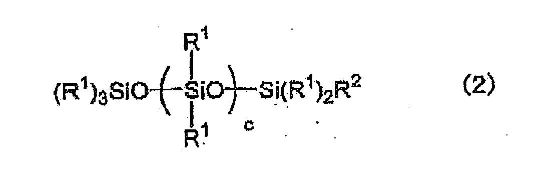 worin R¹, welche gleich oder verschieden voneinander sein können, ausgewählt ist bzw. sind aus der Gruppe, bestehend aus Alkylgruppen, Arylgruppen, Aralkylgruppen und fluorierten Alkylgruppen, jeweils mit 1 bis 30 Kohlenstoffatomen,
R² eine Polyoxyalkylengruppe ist, verkörpert durch die folgende Formel (3)
**-C_{d}H_{2d}-O-(C₂H₄O)ₚ(C₃H₆O)_{q}-R³** (3)
worin R³ ein Wasserstoffatom ist, eine Kohlenwasserstoffgruppe mit 1 bis 30 Kohlenstoffatomen oder eine organische Gruppe, verkörpert durch die Formel R⁴-(CO)-, worin R⁴ eine Kohlenwasserstoffgruppe mit 1 bis 10 Kohlenstoffatomen ist, a eine ganze Zahl von 0 bis 3 ist, b eine ganze Zahl von 1 oder 2 ist, c eine ganze Zahl von 0 bis 6 ist, d eine ganze Zahl von 2 bis 5 ist, p eine ganze Zahl von 5 bis 15 ist und q eine ganze Zahl von 0 bis 10 ist, und
(B) ist mindestens eines, ausgewählt aus der Gruppe, bestehend aus Ethylenoxidaddukt, Propylenoxidaddukt oder Ethylenoxid- und Propylenoxid-gemischtes Addukt von Acetylenglykol, verkörpert durch die folgende Formel (4) und hydrierte Produkte davon 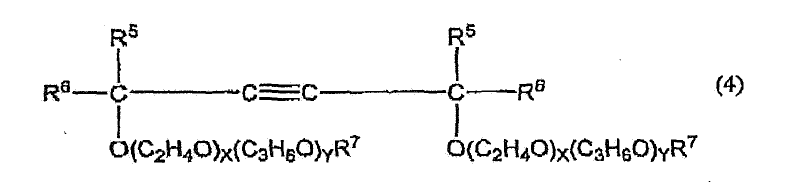
worin jeder von R⁵ und R⁶, die gleich sein können oder verschieden voneinander, eine Alkylgruppe mit 1 bis 5 Kohlenstoffatomen ist, R⁷ ein Wasserstoffatom oder eine Alkylgruppe mit 1 bis 5 Kohlenstoffatomen ist, jeder von X und Y eine ganze Zahl von 0 bis 25 ist und eine Summe aus X und Y liegt im Bereich von durchschnittlich 0,5 bis 50.

2. Desinfektionsmittelzusammensetzung gemäß Anspruch 1, wobei die Zusammensetzung einen pH von 5,0 bis 6,8 bei 25°C besitzt.

3. Desinfektionsmittelzusammensetzung gemäß Anspruch 1 oder 2, wobei das Polyether-modifizierte Silikon verkörpert wird durch die folgende Formel (5): 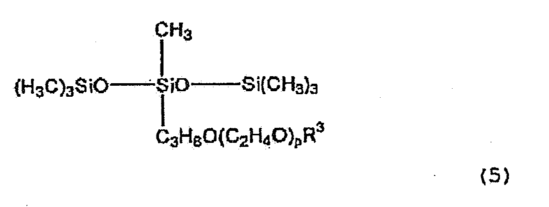 worin R³ ein Wasserstoffatom ist, eine Kohlenwasserstoffgruppe mit 1 bis 30 Kohlenstoffatomen oder eine organische Gruppe, verkörpert durch die Formel R⁴-(CO)-, worin R⁴ eine Kohlenwasserstoffgruppe mit 1 bis 10 Kohlenstoffatomen ist und p eine ganze Zahl von 5 bis 15 ist.

4. Desinfektionsmittelzusammensetzung gemäß Anspruch 3, wobei R³ ein Wasserstoffatom oder eine Methylgruppe ist.

5. Verfahren zur Desinfektion von landwirtschaftlichen Pflanzen, umfassend die Schritte:
Hinzugeben einer Mischung der folgenden Komponenten (A) und (B) in einem Gewichtsverhältnis von (A)/(B) von 1/99 bis 50/50 zu elektrolysiertem Wasser in einer solchen Menge, dass das elektrolysierte Wasser eine Oberflächenspannung bei 25°C von 30 mN/m oder weniger besitzt, wobei
das elektrolysierte Wasser hypochlorige Säure enthält und einen pH von 4,0 bis 6,8 aufweist, sowie einen verfügbaren Chlorgehalt von 10 bis 60 mg/kg,
(A) mindestens eines ist, ausgewählt aus der Gruppe, bestehend aus einem Polyether-modifizierten Silikon, verkörpert durch die folgende Formel (1), und einem Polyether-modifizierten Silikon, verkörpert durch die folgende Formel (2) 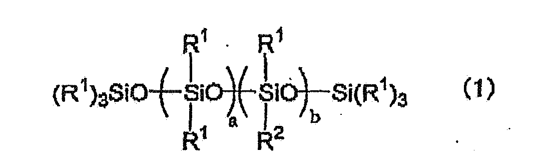 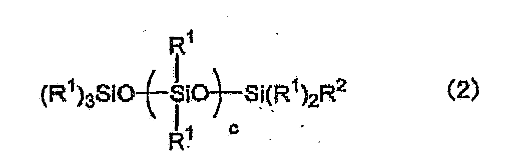 worin R¹, welche gleich oder verschieden voneinander sein können, ausgewählt ist bzw. sind aus der Gruppe, bestehend aus Alkylgruppen, Arylgruppen, Aralkylgruppen und fluorierten Alkylgruppen, jeweils mit 1 bis 30 Kohlenstoffatomen, R² eine Polyoxyalkylengruppe ist, verkörpert durch die folgende Formel (3)
**-C_{d}H_{2d}-O-(C₂H₄O)ₚ(C₃H₆O)_{q}-R³** (3)
worin R³ ein Wasserstoffatom ist, eine Kohlenwasserstoffgruppe mit 1 bis 30 Kohlenstoffatomen oder eine organische Gruppe, verkörpert durch die Formel R⁴-(CO)-, worin R⁴ eine Kohlenwasserstoffgruppe mit 1 bis 10 Kohlenstoffatomen ist, a eine ganze Zahl von 0 bis 3 ist, b eine ganze Zahl von 1 oder 2 ist, c eine ganze Zahl von 0 bis 6 ist, d eine ganze Zahl von 2 bis 5 ist, p eine ganze Zahl von 5 bis 15 ist und q eine ganze Zahl von 0 bis 10 ist, und
(B) ist mindestens eines, ausgewählt aus der Gruppe, bestehend aus Ethylenoxidaddukt, Propylenoxidaddukt oder Ethylenoxid- und Propylenoxid-gemischtes Addukt von Acetylenglykol, verkörpert durch die folgende Formel (4) und hydrierte Produkte davon 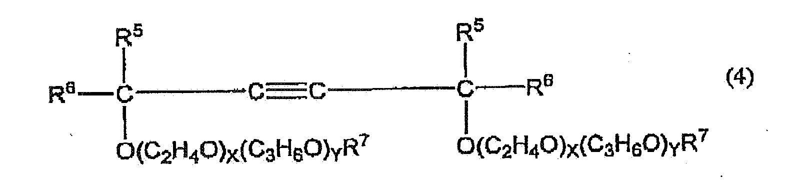
worin jedes von R⁵ und R⁶, die gleich sein können oder verschieden voneinander, eine Alkylgruppe mit 1 bis 5 Kohlenstoffatomen ist, R⁷ ein Wasserstoffatom oder eine Alkylgruppe mit 1 bis 5 Kohlenstoffatomen ist, jedes von X und Y eine ganze Zahl von 0 bis 25 ist und eine Summe aus X und Y liegt im Bereich von durchschnittlich 0,5 bis 50,
und Aufsprühen des elektrolysierten Wassers mit einer Oberflächenspannung bei 25°C von 30 mN/m oder weniger auf landwirtschaftliche Pflanzen.

## Revendications

1. Composition désinfectante comprenant de l'eau électrolysée qui contient de l'acide hypochlore et a un pH de 4,0 à 6,8 et une teneur en chlore disponible de 10 à 60 mg/kg, **caractérisée en ce que** la composition comprend un mélange des composants (A) et (B) suivants en une quantité telle que la composition a une tension superficielle de 30 mN/m ou moins à 25°C, ledit mélange contenant les composants (A) et (B) dans un rapport massique (A)/(B) de 1/99 à 50/50, où
(A) est au moins un choisi dans le groupe consistant en un silicone polyéther-modifié représenté par la formule (1) suivante et un silicone polyféther-modifié représenté par la formule (2) suivante 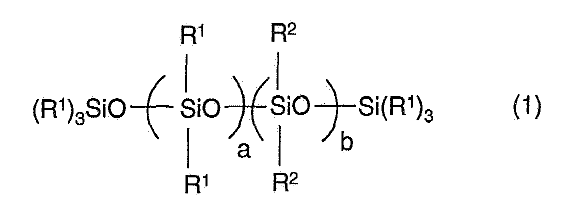 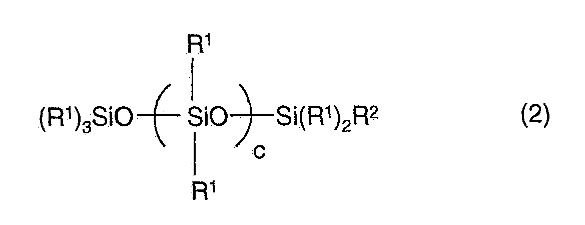 où les R¹, qui peuvent être identiques ou différents les uns des autres, sont choisis dans le groupe consistant en les groupes alkyles, les groupes aryles, les groupes aralkyles et les groupes alkylfluorés ayant chacun 1 à 30 atomes de carbone,
R² est un groupe polyoxyalkylène représenté par la formule (3) suivante :
-C₆H_{2d}-O-(C₂H₄O)ₚ(C₃H₆O)_{q}-R³ (3)
où R³ est un atome d'hydrogène, un groupe hydrocarboné ayant 1 à 30 atomes de carbone ou un groupe organique représenté par la formule R⁴-(CO)-, où R⁴ est un groupe hydrocarboné ayant 1 à 10 atomes de carbone,
a est un entier de 0 à 3, b est un entier de 1 ou 2, c est un entier de 0 à 6, d est un entier de 2 à 5, p est un entier de 5 à 15 et q est un entier de 0 à 10, et
(B) est au moins un choisi dans le groupe consistant en un produit d'addition d'oxyde d'éthylène, un produit d'addition d'oxyde de propylène ou un produit d'addition mixte d'oxyde d'éthylène et d'oxyde de propylène d'acétylèneglycol, représenté par la formule (4) suivante et ses produits hydrogénés 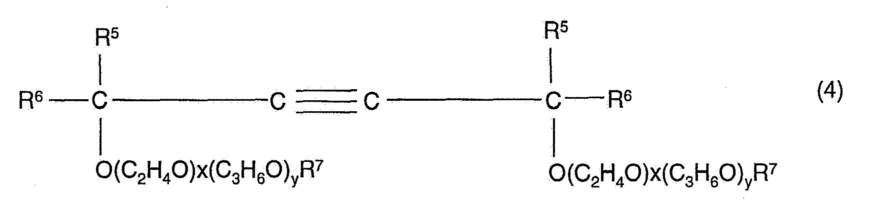 où R⁵ et R⁶ qui peuvent être identiques ou différents l'un de l'autre sont chacun un groupe alkyle ayant 1 à 5 atomes de carbone, R⁷ est un atome d'hydrogène ou un groupe alkylène ayant 1 à 5 atomes de carbone, X et Y sont chacun un entier de 0 à 25 et la somme de X et Y va de 0,5 à 50 en moyenne.

2. Composition désinfectante selon la revendication 1 où la composition a un pH de 5,0 à 6,8 à 25°C.

3. Composition désinfectante selon la revendication 1 ou 2 où le silicone polyéther-modifié est représenté par la formule (5) suivante : 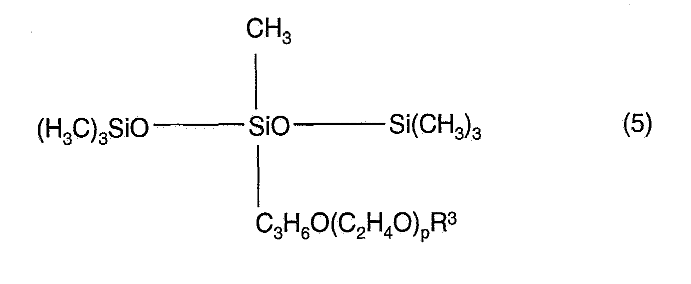 où R³ est un atome d'hydrogène, un groupe hydrocarboné ayant 1 à 30 atomes de carbone ou un groupe organique représenté par la formule R⁴-CO)-, où R⁴ est un groupe hydrocarboné ayant 1 à 10 atomes de carbone et p est un entier de 5 à 15.

4. Composition désinfectante selon la revendication 3 où R³ est un atome d'hydrogène ou un groupe méthyle.

5. Procédé de désinfection de plantes agricoles comprenant les étapes de
addition d'un mélange des composants (A) et (B) suivants dans un rapport massique (A)/(B) de 1/99 à 50/50 à une eau électrolysée en une quantité telle que l'eau électrolysée a une tension superficielle à 25°C de 30 mN/m ou moins, où
l'eau électrolysée contient de l'acide hypochloré et a un pH de 4,0 à 6,8 et une teneur en chlore disponible de 10 à 60 mg/kg,
(A) est au moins un choisi dans le groupe consistant en un silicone polyéther-modifié représenté par la formule (1) suivante et un silicone polyféther-modifié représenté par la formule (2) suivante 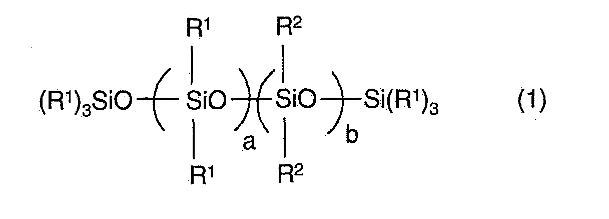 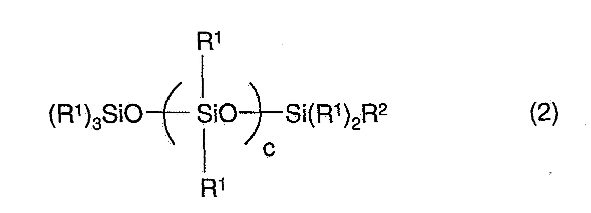 où les R¹, qui peuvent être identiques ou différents les uns des autres, sont choisis dans le groupe consistant en les groupes alkyles, les groupes aryles, les groupes aralkyles et les groupes alkylfluorés ayant chacun 1 à 30 atomes de carbone,
R² est un groupe polyoxyalkylène représenté par la formule (3) suivante :
-C₆H_{2d}-O-(C₂H₄O)ₚ(C₃H₆O)_{q}-R³ (3)
où R³ est un atome d'hydrogène, un groupe hydrocarboné ayant 1 à 30 atomes de carbone ou un groupe organique représenté par la formule R⁴-(CO)-, où R⁴ est un groupe hydrocarboné ayant 1 à 10 atomes de carbone,
a est un entier de 0 à 3, b est un entier de 1 ou 2, c est un entier de 0 à 6, d est un entier de 2 à 5, p est un entier de 5 à 15 et q est un entier de 0 à 10, et
(B) est au moins un choisi dans le groupe consistant en un produit d'addition d'oxyde d'éthylène, un produit d'addition d'oxyde de propylène ou un produit d'addition mixte d'oxyde d'éthylène et d'oxyde de propylène d'acétylèneglycol, représenté par la formule (4) suivante et ses produits hydrogénés 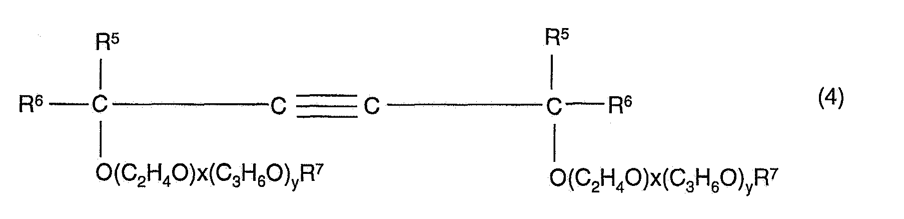
où R⁵ et R⁶ qui peuvent être identiques ou différents l'un de l'autre sont chacun un groupe alkyle ayant 1 à 5 atomes de carbone, R⁷ est un atome d'hydrogène ou un groupe alkylène ayant 1 à 5 atomes de carbone, X et Y sont chacun un entier de 0 à 25 et la somme de X et Y va de 0,5 à 50 en moyenne,
l'épandage de l'eau électrolysée ayant une tension superficielle à 25°C de 30 mN/m ou moins sur des plantes agricoles.
